# EUROPÄISCHE PATENTSCHRIFT

(11) **EP 0 895 743 B1**
(45) Veröffentlichungstag und Bekanntmachung des Hinweises auf die Patenterteilung: **17.11.1999**
(21) Anmeldenummer: 98109818.9
(22) Anmeldetag: 29.05.1998
(51) Int. Cl.: A47J 37/06, A47J 36/24

(54) **Salamander**
Salamander
Salamandre

(30) Priorität: 06.08.1997 DE 29714039 U
(43) Veröffentlichungstag der Anmeldung: 10.02.1999
(73) Patentinhaber: Bartscher GmbH, 33154 Salzkotten (DE)
(72) Erfinder: Bartscher, Hans, 59590 Geseke (DE)
(74) Vertreter: Thielking, Bodo, Dipl.-Ing.

(56) Entgegenhaltungen:
- CH-A- 338 573
- CH-A- 562 596
- DE-U- 29 509 531
- DE-U- 29 610 240

## Beschreibung

Die Erfindung betrifft einen Salamander nach dem Oberbegriff des Anspruchs 1.

Übliche Salamander, die vor allen Dingen in Großküchen zum Warmhalten von Speisen benutzt werden, sind mit Infrarot-Heizelementen bestückt (DE 296 10 240 U1). Der Nachteil dieser Infrarot-Heizstäbe liegt vor allen Dingen darin, daß sie vergleichsweise träge reagieren und lange Aufheizzeiten benötigen. Dies führt dazu, daß in den Großküchen die Salamander unabhängig von dem tatsächlichen Bedarf praktisch während der gesamten Arbeitszeit eingeschaltet bleiben, damit sie für die Köche bei Bedarf stets sofort benutzbar sind. Mit dieser Benutzungsweise wird sehr viel Strom verschwendet.

Der Erfindung liegt die Aufgabe zugrunde, einen Salamander zu schaffen, der die Nachteile der bekannten Salamander vermeidet und unmittelbar nach dem Einschalten betriebsbereit ist.

Die Lösung dieser Aufgabe erfolgt dadurch, daß der Heizleiter als gestanzter Heizleiter mit Breitseiten und Schmalseiten ausgebildet ist, dessen untere Schmalseite zur Aufstandsfläche weist, und der zu seinen Breitseiten frei abstrahlt.

Derartige Strahlungsheizkörper haben den Vorteil, daß Sie innerhalb kürzester Zeit ihre volle Leistung bereitstellen. So beträgt die Aufglühzeit, also die Dauer vom Einschalten des Strahlungsheizkörpers bis zur deutlichen Sichtbarkeit des Glühbildes hinter der den Strahlungsheizkörper nach unten abdeckenden Glaskeramikscheibe, nur ca. 3 Sekunden.

Vom Warmzustand aus beträgt die Aufglühzeit nur ca. 1 Sekunde.

Der erfindungsgemäße Salamander vermeidet die Nachteile der bekannten Geräte. Da er extrem flink reagiert, besteht für die Köche keine Veranlassung mehr, in stromverschwendender Weise den Salamander stets während der gesamten Betriebszeit eingeschaltet zu halten.

Darüber hinaus läßt sich die Leistung des Salamanders entsprechend den jeweiligen Bedürfnissen innerhalb kürzester Frist verändern und bei Bedarf auch auf feste vorgegebene Werte einregeln.

Bei einer bevorzugten Ausführungsform ist die Einschaltzeit der Heizeinrichtung wählbar. Dabei ist es besonders vorteilhaft, daß die Einschaltdauer mittels den unterschiedlichen Einschaltzeiten zugeordneter unterschiedlicher Tastschalter wählbar ist.

Nach Ablauf der gewählten Einschaltzeit wird der Strom abgeschaltet, so daß eine auch unbeabsichtigte Stromverschwendung ausgeschlossen wird. Sollte die Einschaltzeit zu kurz gewesen oder wegen anderer Tätigkeiten die warmgehaltene oder überbackene Speise bereits wieder abgekühlt sein, kann sofort und ohne Zeitverluste nachgeheizt werden.

Nachstehend wird eine bevorzugte Ausführungsform der Erfindung anhand der Zeichnung beschrieben. Es zeigen:

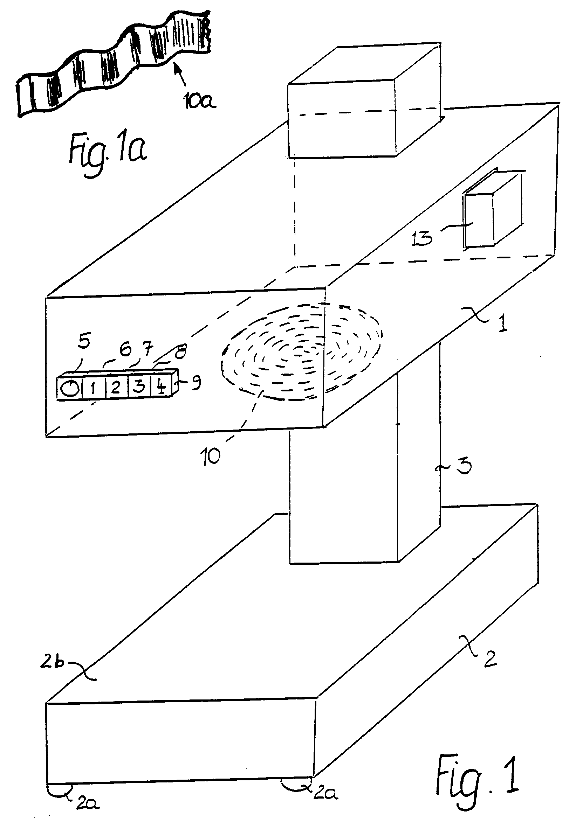

- Figur 1: - eine schematische Darstellung eines Salamanders mit einer lediglich schematisch angedeuteten Heizeinrichtung,
- Figur 1a: - eine perspektivische Darstellung des Heizleiters der Heizeinrichtung.

Ein Unterteil 2 steht mit Standfüßen 2a auf der Arbeitsfläche. Von dem Unterteil 2 ragt eine vertikale Säule 3 auf. Auf der vertikalen Säule 3 ist höhenverschieblich die Haube 1 geführt. Zum Verstellen der Haube 1 in der Höhe wird ein Betätigungsknopf 13 eingedrückt mit der Folge, daß die Haube 1 im gedrückten Zustand des Betätigungsknopfes 13 leicht auf der Säule 3 verschiebbar ist. In der gewünschten Höhe wird der gegen die Kraft einer nicht dargestellten Rückstellfeder betätigte Betätigungsknopf 13 losgelassen und mittels einer nicht dargestellten Klemmmechanik erfolgt dann eine Fixierung der Haube 1 an der Säule 3.

An der zum Unterteil 2 weisenden Seite der Haube 1 ist eine Heizeinrichtung 10 angeordnet, die nach unten von einer nicht dargestellten Glaskeramikplatte abgedeckt sein kann, wie sie aus Glaskeramik-Kochflächen bekannt ist.

Mit 5 ist eine Kontrollampe an der Frontseite bezeichnet, die den Betriebszustand des Salamanders anzeigt. Neben der Kontrollampe 5 sind vier Drucktasten 6, 7, 8 und 9 angeordnet. Die Drucktaste 6 steuert eine Einschaltzeit der Heizeinrichtung 10 von 1 Minute, die Drucktaste 7 von 2 Minuten, die Drucktaste 8 von 3 Minuten und die Drucktaste 9 von 4 Minuten.

In Figur 1a ist der gewellte, gestanzte Heizleiter 10a dargestellt. Der Heizleiter 10a kann zu seinen Breitseiten frei abstrahlen. Mit seiner unteren Schmalseite weist er in Richtung auf die Aufstandsfläche 2b des Unterteils 2.

Es können selbstverständlich auch mehr Betätigungseinrichtungen und andere als Drucktasten vorgesehen sein. Außerdem können den unterschiedlichen Betätigungseinrichtungen auch andere geeignete Betriebszeiten zugeordnet sein.

## Patentansprüche

1. Salamander mit einer höhenverstellbaren Haube (1), die eine Heizeinrichtung (10) mit Strahlungsheizkörper aufweist, der einen zu einer Aufstandsfläche (2b) weisenden, gewellten Heizleiter (10a) hat,
dadurch gekennzeichnet,
daß der Heizleiter (10a) als gestanzter Heizleiter mit Breitseiten und Schmalseiten ausgebildet ist, dessen untere Schmalseite zur Aufstandsfläche (2b) weist, und der zu seinen Breitseiten frei abstrahlt.

2. Salamander nach Anspruch 1,
dadurch gekennzeichnet,
daß die Leistung der Heizeinrichtung (10) regelbar ist.

3. Salamander nach Anspruch 1 oder 2,
dadurch gekennzeichnet,
daß die Heizeinrichtung (10) eine die Heizleiter (10a) nach unten abdeckende Glaskeramik-Abdeckung aufweist.

4. Salamander nach einem oder mehreren der Ansprüche 1 bis 3,
dadurch gekennzeichnet,
daß die Dauer vom Einschalten der Heizeinrichtung (10) bis zur deutlichen Sichtbarkeit des Glühbildes (= Aufglühzeit) vom Kaltzustand ca. 3 Sekunden beträgt.

5. Salamander nach Anspruch 4,
dadurch gekennzeichnet,
daß die Aufglühzeit vom Warmzustand ca. 1 Sekunde beträgt.

6. Salamander nach einem oder mehreren der Ansprüche 1 bis 5,
dadurch gekennzeichnet,
daß die Einschaltdauer der Heizeinrichtung (10) wählbar ist.

7. Salamander nach einem oder mehreren de Ansprüche 1 bis 6,
dadurch gekennzeichnet,
daß die Einschaltdauer mittels den unterschiedlichen Einschaltzeiten (z.B. 1, 2, 3, 4 Min.) zugeordneter, unterschiedlicher Tastschalter (6; 7; 8; 9) wählbar ist.

8. Salamander nach Anspruch 6,
dadurch gekennzeichnet,
daß die Einschaltdauer mittels einer Zeitschaltuhr einstellbar ist.

## Claims

1. Salamander with a height adjustable hood (1) which has a heating device (10) with radiation heating bodies which has a wavy heating conductor (10a) pointing towards a standing surface (2b) characterised in that the heating conductor (10a) is formed as a stamped heating conductor with wide sides and narrow sides whose lower narrow side points towards the standing surface (2b) and which radiates freely on its wide sides.

2. Salamander according to claim 1 characterised in that the power output of the heating device (10) can be regulated.

3. Salamander according to claim 1 or 2 characterised in that the heating device (10) has a glass ceramic cover covering the heating conductor (10a) at the bottom.

4. Salamander according to one or more of claims 1 to 3 characterised in that the length of time from switching on the heating device (10) until the glow picture is clearly visible (= glow time) from cold amounts to about 3 seconds.

5. Salamander according to claim 4 characterised in that the glow time from warm amounts to about 1 second.

6. Salamander according to one or more of claims 1 to 5 characterised in that the switched-on time of the heating device (10) is selectable.

7. Salamander according to one or more of claims 1 to 6 characterised in that the switched-on time can be selected by means of different press buttons (6,7,8,9) associated with different switched-on times (e.g. 1, 2, 3, 4 minutes).

8. Salamander according to claim 6 characterised in that the switched-on time can be set by means of a timer.

## Revendications

1. Salamandre comprenant un élément supérieur (1) équipé d'un dispositif de chauffage (10) avec radiateur pourvu d'un conducteur (10a) ondulé, dirigé vers une surface d'appui (2b)
caractérisée en ce que
le conducteur de chauffage (10a) est un conducteur estampé qui présente des côtés larges et des côtés étroits, son côté étroit, inférieur étant dirigé vers la surface d'appui 2b) tandis que ses côtés larges laissent la chaleur rayonner librement.

2. Salamandre selon la revendication 1,
caractérisée en ce que
le rendement du dispositif de chauffage 10) est réglable.

3. Salamandre selon la revendication 1 ou 2,
caractérisée en ce que
le dispositif de chauffage (10) présente une plaque de vitrocérame couvrant le conducteur de chauffage (10a) du côté inférieur de ce lui-ci.

4. Salamandre selon l'une ou plusieurs des revendications 1 à 3,
caractérisée en ce que
la durée du passage du dispositif de chauffage (10) de l'état froid à l'état incandescent visible est d'environ 3 secondes.

5. Salamandre selon la revendication 4,
caractérisée en ce que
la durée du passage du dispositif de chauffage de l'état chaud à l'état incandescent est d'environ 1 seconde.

6. Salamandre selon l'une ou plusieurs des revendications 1 à 5,
caractérisée en ce que
la durée de fonctionnement du dispositif de chauffage (10) est sélectionnable.

7. Salamandre selon l'une ou plusieurs des revendications 1 à 6,
caractérisée en ce
que la durée de fonctionnement peut être sélectionnée en fonction des temps de connexion (par ex.: 1, 2, 3, 4 minutes) subordonnés aux différentes touches (6; 7; 8; 9).

8. Salamandre selon la revendication 6,
caractérisée en ce que
la durée de connexion peut être réglée à l'aide d'une minuterie.
